## Europäisches Patentamt

## European Patent Office

## Office européen des brevets

(11) Publication number: **0 036 462**
**B2**

(12) **NEW EUROPEAN PATENT SPECIFICATION**

(45) Date of publication of the new patent specification: 27.06.90

(51) Int. Cl.⁵: **C 04 B 35/46, C 04 B 35/00**

(21) Application number: 80302078.3

(22) Date of filing: 19.06.80

(54) A honeycomb structure for use as a catalyst support for automobile exhaust.

(30) Priority: 26.03.80 JP 37523/80

(43) Date of publication of application:
30.09.81 Bulletin 81/39

(45) Publication of the grant of the patent:
20.07.83 Bulletin 83/29

(45) Mention of the opposition decision:
27.06.90 Bulletin 90/26

(84) Designated Contracting States:
BE DE FR GB IT NL SE

(73) Proprietor: NGK INSULATORS, LTD.
2-56, Suda-cho, Mizuho-ku
Nagoya-shi, Aichi 467 (JP)

(72) Inventor: Oda, Isao
No.19, 3-chome, Gokuraku Meito-Ku
Nagoya City (JP)
Inventor: Matsuhisa, Tadaaki
No.2878-678-77, Aza-Kuroishi Ohaza-Hirabari
Tenpaku-cho Tenpaku-Ku Nagoya City (JP)

(74) Representative: Paget, Hugh Charles Edward et al
MEWBURN ELLIS & CO. 2/3 Cursitor Street
London EC4A 1BQ (GB)

(56) References cited:
AT-B- 190 439
DD-A- 29 794
DE-A-2 750 290
DE-B-2 350 166
DE-C- 933 378
US-A-2 776 896
US-A-4 098 725

H. Walter, Silikattechnik 21 (1970), Heft 9, pp. 304-306

Pohlmann et al., Bericht der Deutschen Keramischen Gesellschaft 52 ((1975), pp. 179-183

(56) References cited:

N. Thielke, WADC Technical Report 53-165 (1953)

E. Gugel et al., Tonindustrie Zeitung 98 (1974), Nr. 12, pp. 315-318

A. Berezhnoi et al., Ukrain. Chem. Journal (1955), pp. 158-166

S. Babayan et al., Amr. Khim. Zh. (1973), Vol. 26, pp. 549-554

Courier Press, Leamington Spa, England.

(56) References cited:

F. Troyan, Die oxidischen Kristallphasen der anorganischen Industrieprodukte, 1963, pp. 91-93, 199-206

G. Bayer, Journal of the less-common metals, 24 (1971), pp. 129-138

# EP 0 036 462 B2

**Description**

This invention relates to a honeycomb structure for use as a catalyst support for automobile exhaust honeycomb structures for use as catalyst supports for automobile exhaust, forms of low-expansion ceramic materials having a low coefficient of thermal expansion and a high melting point, which coefficient of thermal expansion scarcely varies with heating up and cooling down or soaking at high temperatures.

With the process of technology in recent years, the demand for materials having good heat resistance and good thermal shock resistance is increasing. The thermal shock resistance of ceramic materials depends on various characteristics of the material, such as its coefficient of thermal expansion, its heat conductivity, its mechanical strength, its Young's modulus, and the Poisson's ratio. The thermal shock resistance is also affected by the size and shape of the goods concerned and the conditions of heating and cooling or the rate of heat propagation.

Among those factors affecting the thermal shock resistance, the contribution of the coefficient of the thermal expansion is especially large, and when the rate of heat propagation is high, the thermal shock resistance is determined almost solely by the coefficient of thermal expansion, as is well known to those skilled in the art. Accordingly, there is a marked demand for the development of low-expansion materials having good resistance to thermal shock.

Known ceramics having a comparatively low thermal expansion, i.e. having a coefficient of thermal expansion of the order of 5 to $20 \times 10^{-7}$ (1/°C), in the temperature range 25°C to 800°C, are cordierite (MAS) and lithium-aluminium-silicate (las). However, such known ceramics have a comparatively low melting point, for example the melting point of cordierite is 1,450°C and that of lithium-aluminium-silicate is 1,423°C. When, for example, such ceramics are used to make ceramic honeycombs for use as catalyst substrates or supports in catalytic exhaust gas purifying apparatus for automobiles, even the honeycomb substrate formed of cordierite, having a higher melting point, has been found vulnerable to plugging due to melting if the temperature of the catalyst bed is increased by 100 to 200°C over that of a conventional catalyst bed. The increase of temperature of the catalyst bed is caused by alteration of the mounting position of the catalytic converter from the conventional location of under bed to close to the engine, in order to improve the purifying efficiency of the catalyst, and by design modifications involving the mounting of a turbocharger to improve the fuel economy and engine output, which modifications cause an increase in the exhaust gas temperature as compared with that of conventional apparatus. Accordingly, the development of low-expansion materials having good heat-resistance, which also have good thermal shock resistance, equivalent to or better than that of cordierite, has been required.

It has now been found, in accordance with the present invention that certain ceramic materials consisting essentially of oxides of magnesium, aluminium, titanium and iron have low-expansion characteristics which do not substantially alter even after exposure to prolonged heat treatments of 2,000 to 5,000 hours at about 1,000°C to 1,200°C and even after repeated exposure to heating up and cooling down.

According to the invention there is provided a honeycomb structure as set out in claim 1.

In this specification, titanium is assumed to be quadrivalent, even though it is able to form non-stoichiometric composition with oxide.

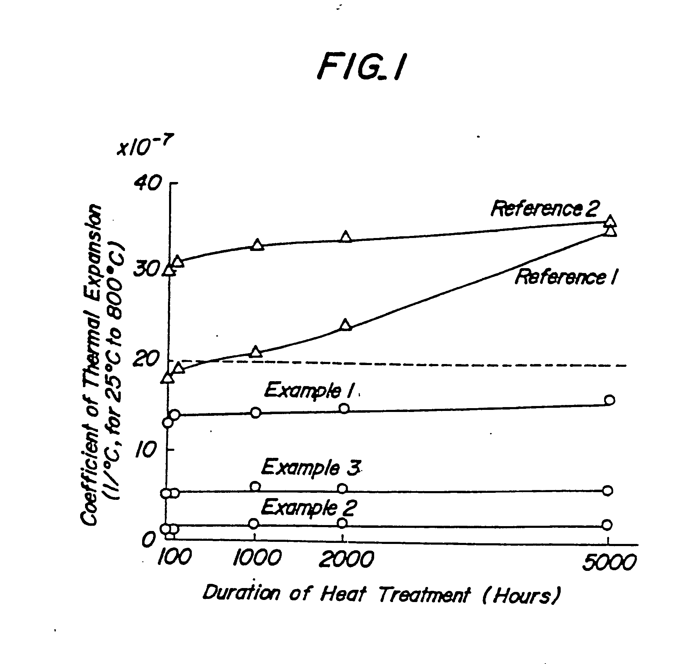

In the description reference will be made to the accompanying drawing which is a graph showing the relationship between the duration of heat treatment at 1,100°C and coefficients of thermal expansion, in the temperature range 25°C to 800°C for low-expansion ceramic materials of the invention and comparative ceramic materials.

The ceramic materials used in the invention contain from 2.5 to 17%, by weight of magnesia, from 13.5 to 62% by weight of alumina, from 31.5 to 75%, by weight of titanium oxide (calculated as titanium dioxide), and from 2 to 10%, by weight of iron oxide (calculated as ferric oxide) since this range of chemical composition provides low-expansion ceramic materials of good heat resistance which have a coefficient of thermal expansion of not more than $20 \times 10^{-7}$ (1/°C), in the temperature range 25°C to 800°C, and a melting point of 1,500°C or higher, which coefficient of thermal expansion is maintained even after exposure to 1,100°C for 1,000 hours. Ceramic materials having chemical compositions outside the above range contain increased amounts of other crystalline phases having a larger thermal expansion and more particularly produce materials having a coefficient of thermal expansion of greater than $20 \times 10^{-7}$ (1/°C) and an inferior thermal shock resistance.

The iron oxide content is limited to 2—10% by weight (calculated as ferric oxide) since within this range the iron oxide content serves to prevent the coefficient of thermal expansion from changing upon exposure at a constant temperature for a long period of time, such as at 1,000°C to 1,200°C for more than 2,000 hours, or to repeated heating up and cooling down. Further this range of iron oxide content provides ceramic materials having a coefficient of thermal expansion of not more than $20 \times 10^{-7}$ (1/°C) in the temperature range of 25°C to 800°C and having a high melting point of 1,500°C or higher.

The major component of the crystalline phase of the low-expansion ceramic material of the invention is a magnesium oxide/aluminium oxide/titanium oxide/iron oxide solid solution. However, the invention provides for the presence of not more than 20% by weight, preferably not more than 10% by weight, of at least one secondary crystalline phase selected from rutile, spinel, and corundum crystalline phases, because this range of secondary crystalline phases improve the heat resistance of the material by

3

increasing the softening temperature and the melting temperature of the ceramics and reducing the gradient of the softening-shrinkage curve from the softening temperature to the melting temperature, without adversely affecting the low-expansion characteristics of the material.

The low-expansion ceramic materials of the invention are prepared by first forming a mixture of magnesia or precursor therefor, alumina or precursor therefor, titanium oxide or precursor therefor and iron oxide or precursor therefor containing from 2.5—17% by weight magnesia, from 13.5—62% by weight of alumina, from 31.5—75% by weight of titanium oxide (calculated as titanium dioxide) and from 2—10% by weight of iron oxide (calculated as ferric oxide). If necessary, a plasticizer and/or binder is added to the thus formed mixture to give a batch which is shapable in a plastic manner. The batch is then formed by a ceramic forming process, such as extrusion, pressing, slip casting or injection moulding. The formed body is dried. The dried body is then heated by increasing its temperature at a rate of 5°C/hour to 300°C/hour and fired at 1,300°C to 1,700°C for 0.5 to 48 hours, thereby to produce a low-expansion ceramic material according to the invention.

The magnesia component of the starting mixture may, for example, be magnesia, magnesium carbonate or magnesium hydroxide; the alumina component may, for example, be alumina or aluminium hydroxide; the titanium oxide component may, for example, be anatase type titanium dioxide, rutile type titanium dioxide or ilmenite; and the iron oxide component may, for example, be metallic iron, alpha-type ferric oxide, gamma-type ferric oxide or, hydrated iron oxide.

The starting materials are not restricted to the aforesaid substances, and in addition various natural materials having essentially the aforesaid chemical compositions can be also used to produce the low-expansion ceramic materials.

The product of the invention is a honeycomb-shaped body/having a thin walled matrix with a plurality of cells extending from one end to the other, and the cells of such a honeycomb body can be of any geometrical form in cross-section such as triangular, rectangular, hexagonal, any polygonal, circular or a combination thereof.

In order that the invention may be well understood the following examples of ceramic materials useful in the invention are given by way of illustration only.

Mixture of raw materials selected so as to provide the chemical compositions given in Table 1 were prepared. Two parts by weight of a vinyl acetate binder were added to 100 parts by weight of each mixture and the binder was thoroughly mixed with the mixture. Rod-shaped test pieces, 10 mm × 10 mm × 80 mm, were then made from the binder-containing mixture by pressing at a pressure of 1,000 kg/cm². The rod-shaped test pieces thus formed were fired under the firing conditions shown in Table 1, to produce ceramic materials useful in the invention (Examples 1—3) and comparative ceramic materials (Examples C1 and C2).

TABLE 1

| Example | Composition of starting mixture (% by weight) | | | | Firing conditions | |
|---|---|---|---|---|---|---|
| | MgO | Al₂O₃ | TiO₂ | Fe₂O₃ | Temp. (°C) | Time (hrs) |
| 1 | 10.0 | 38.0 | 50.0 | 2.0 | 1550 | 5 |
| 2 | 7.0 | 31.0 | 57.0 | 5.0 | 1500 | 3 |
| 3 | 4.5 | 33.0 | 52.5 | 10.0 | 1450 | 10 |
| C1 | 11.0 | 20.0 | 69.0 | – | 1500 | 3 |
| C2 | 8.0 | 15.0 | 52.0 | 25.0 | 1400 | 5 |

Notes: C denotes comparative example.

The rod-shaped test pieces were then subjected to heat treatments at a temperature which is most likely to cause changes in the coefficient of thermal expansion upon exposure to long-time heat treatment; namely, at 1,100°C for 100 hours, 1,000 hours, 2,000 hours and 5,000 hours. The coefficients of thermal expansion, in the temperature range 25°C to 800°C, and the melting point of the test pieces before the heat treatments at 1,100°C were measured. The coefficients of expansion after the heat treatment at 1,100°C wre also measured.

The results are shown in Table 2.

### TABLE 2

Properties of ceramic materials

| Example | Melting point (°C) | Coefficient of thermal expansion (25—800°C) × 10⁻⁷ (1/°C) | | | | |
|---|---|---|---|---|---|---|
| | | Initial | After heat treatment at 1,100°C for | | | |
| | | | 100 hrs | 1,000 hrs | 2,000 hrs | 5,000 hrs |
| 1 | 1680 | 13 | 14 | 14 | 15 | 16 |
| 2 | 1710 | 1 | 1 | 2 | 2 | 2 |
| 3 | 1590 | 5 | 5 | 6 | 6 | 6 |
| C1 | 1670 | 18 | 19 | 21 | 24 | 35 |
| C2 | 1350 | 30 | 31 | 33 | 34 | 36 |

The ceramic materials of Examples 1—3 showed low-expansion characteristics with a coefficient of thermal expansion of not more than $20 \times 10^{-7}$ (1/°C), in the temperature range 25°C to 800°C, and had high melting points above 1,500°C.

Furthermore, the ceramic materials of Exmaples 1—3 showed substantially no increase in the coefficient of thermal expansion on heat treatment at 1,100°C for more than 2,000 hours, so that they proved to be low-expansion ceramic materials which were very stable to heat treatment.

The results are also shown in the acocmpanying drawing.

As described above, the low-expansion ceramic materials useful in the invention had a low coefficient of thermal expansion, a high melting point, and a high thermal stability even after being exposed to heat treatment at temperatures of up to 1,400°C for a number of hours.

### Claim

A honeycomb structure for use as a catalyst support in purifying apparatus for automobile exhaust, formed of a low-expansion ceramic material consisting essentially of from 2.5 to 17% by weight of magnesia, from 13.5 to 62% by weight of alumina, from 31.5 to 75% by weight of titanium oxide (calculated as titanium dioxide), and from 2 to 10% by weight of iron oxide (calculated as ferric oxide), the crystalline phase of ceramic material having a major component which is a magnesium oxide/aluminium oxide/titanium oxide/iron oxide solid solution and containing a secondary phase or phases present in said major component, said secondary phase or phases being in total an amount not exceeding 20% by weight of the ceramic material of one or more of rutile, spinel and corundum crystals, the ceramic material having a coefficient of thermal expansion of not more than $20 \times 10^{-7}$ (1/°C) in the temperature range 25°C to 800°C, and a melting point of not less than 1,500°C, said coefficient of thermal expansion being maintained after exposure of the ceramic material to a temperature of 1,100°C for 1,000 hours.

### Patentanspruch

Honigwabenstruktur für die Verwendung als Katalysatorträger in einer Reinigungsvorrichtung für Automobilabgase, gebildet aus einem keramischen Material mit niedriger Ausdehnung, bestehend im wesentlichen aus 2,5 bis 17 Gew.% Magnesiumoxid, 13,5 bis 62 Gew.% Aluminiumoxid, 31,5 bis 75 Gew.% Titanoxid (berechnet als Titandixoid) und 2 bis 10 Gew.% Eisenoxid (berechnet als Eisen(III)oxid), wobei die Hauptkomponente der kristallinen Phase des keramischen Materials eine feste Lösung von Magnesiumoxid/Aluminiumoxid/Titanoxid/Eisenoxid ist und in der Hauptkomponente eine zweite Phase oder Phasen vorliegen, wobei die zweite Phase oder Phasen in einer Gesamtmenge vorliegen, die 20 Gew.% des keramischen Materials nicht übersteigt und aus einem oder mehreren Kristallen aus Rutil, Spinell und Korund besteht, das keramische Material einen thermischen Ausdehnungskoeffizienten von 20

# EP 0 036 462 B2

$\times 10^{-7}$ (1/°C) im Temperaturbereich von 25 bis 800°C und einen Schmelzpunkt von nicht weniger als 1500°C aufweist, wobei der thermische Ausdehnungskoeffizient auch nach Aussetzen des keramischen Materials bei einer Temperatur von 1100°C während 1000 Stunden beibehalten wird.

## Revendication

Structure en nid d'abeilles destinée à être utilisée comme support de catalyseur dans des appareils de purification des gaz d'échappement des automobiles, formée d'une matière céramique à faible dilatation, consistant essentiellment en 2,5 à 17% en poids de magnésie, 13,5 à 62% en poids d'alumine, 31,5 à 75% en poids d'oxyde de titane (calculé en bioxyde de titane), et 2 à 10% en poids d'oxyde de fer (calculé en oxyde ferrique), la phase cristalline de la matière céramique ayant un composant principal qui est une solution solide oxyde de magnésium/oxyde d'aluminium/oxyde de titane/oxyde de fer et contenant une phase ou des phases secondaires présentes dans ledit composant principal, ladite phase ou lesdites phases secondaires représentant au total une quantité ne dépassant pas 20% en poids de la matière céramique d'au moins l'un parmi les cristaux de rutile, de spinelle et de corindon, la matière céramique ayant un coefficient de dilatation thermique ne dépassant pas $20 \times 10^{-7}$ (1/°C) dans l'intervalle de températures de 25°C à 800°C, et un point de fusion qui n'est pas inférieur à 1500°C, ledit coefficient de dilatation thermique étant maintenu après exposition de la matière céramique à une température de 1100°C pendant 1000 heures.

# FIG.1